# EUROPÄISCHE PATENTANMELDUNG

(11) **EP 4 223 507 A1**
(43) Veröffentlichungstag der Anmeldung: **09.08.2023**
(21) Anmeldenummer: 22155212.8
(22) Anmeldetag: 04.02.2022
(51) Int. Cl.: B32B 15/085, B32B 27/32, B65D 77/04, B65D 81/24

(54) **SEKUNDÄRVERPACKUNG FÜR EIN ARZNEIMITTELPRODUKT SOWIE VERFAHREN ZUR HERSTELLUNG EINES ARZNEIMITTELPRODUKTS**

(71) Anmelder: Fresenius Kabi Deutschland GmbH, 61352 Bad Homburg (DE)
(72) Erfinder: BRANDENBURGER, Torsten, 61169 Friedberg (DE); HEUEL-HÖMMEN, Beatrix, 61169 Friedberg (DE)
(74) Vertreter: Fresenius Kabi Deutschland GmbH

(57) **Zusammenfassung**

Die Offenbarung beschreibt eine als Beutel ausgebildete Sekundärverpackung für ein Arzneimittelprodukt. Die Sekundärverpackung ist aus einer Folie ausgebildet, welche eine Außenseite und eine Innenseite umfasst. Die Folie umfasst eine Sauerstoffbarriereschicht aus einem Metall- und/oder Halbmetalloxid, wobei die Folie zumindest drei Lagen umfasst, von denen eine erste innere Lage ein Polyolefin, insbesondere ein Polypropylen ist, wobei sich in Richtung der Außenseite eine zweite Lage und eine dritte Lage eines Kunststoffes anschließen. Die drei Lagen sind mittels einer ersten Klebstoffschicht und einer zweiten Klebstoffschicht verbunden. Die Sauerstoffbarriereschicht ist zwischen der ersten Klebstoffschicht und der zweiten Klebstoffschicht angeordnet.

## Beschreibung

Die Erfindung betrifft eine als Beutel ausgebildete Sekundärverpackung für eine Primärverpackung mit einer medizinischen Flüssigkeit, zum Beispiel einer Flüssigkeit zur parenteralen Ernährung. Weiter betrifft die Erfindung ein Arzneimittelprodukt mit einer solchen Sekundärverpackung.

Die Erfindung betrifft insbesondere einen Infusionsbeutel, welcher in einer Sekundärverpackung angeordnet ist.

Insbesondere betrifft die Erfindung einen Infusionsbeutel, welcher als Mehrkomponentenbeutel ausgebildet ist und mit den Bestandteilen einer vorzugsweise parenteralen Ernährungslösung befüllt ist. Dieser Infusionsbeutel ist insbesondere zur Verwendung in der Pädiatrie ausgebildet.

Weiter betrifft die Erfindung die Verwendung einer Sauerstoffbarriereschicht zur Reduzierung der Migration von zyklischem Diethylen-Glycol-Adipat.

### Hintergrund der Erfindung

Als Mehrkammerbeutel ausgebildete Infusionsbeutel werden insbesondere zur Bereitstellung einer parenteralen Ernährungslösung verwendet. Ein derartiger Infusionsbeutel kann insbesondere drei Kammern umfassen, in denen eine Fett-, eine Protein- und eine Wasser- (bzw. Salz-Zucker-Lösung) Komponente enthalten ist. Unmittelbar vor der Anwendung werden die Komponenten vermischt. Dies erfolgt insbesondere dadurch, dass abziehbare (peelable) Schweißnähte, welche die Kammern des Beutels voneinander trennen, durch Rollen und Drücken des Beutels geöffnet werden.

Sodann kann die Infusionslösung über ein Anschlussset entnommen und dem Patienten zugeführt werden. Hierzu umfasst die Primärverpackung zumindest einen Konnektor, in den beispielsweise ein Spike oder eine Nadel eingestochen werden kann. Meist umfasst ein derartiger Infusionsbeutel auch einen weiteren Konnektor, welcher als Zuspritzport dient, um ggf. der Ernährungslösung Medikamente, beispielsweise mittels einer Nadelspritze, zudosieren zu können.

Die Anforderungen an Qualität und Sterilität sind hoch. Es hat sich daher etabliert, dass ein derartiger Infusionsbeutel in einer Sekundärverpackung angeordnet ist. Bei der Herstellung kann die Sekundärverpackung zusammen mit der bereits in der geschlossenen Sekundärverpackung vorhandenen Primärverpackung sterilisiert werden, insbesondere durch Autoklavieren. Somit ist die gesamte Primärverpackung einschließlich ihrer äußeren Oberfläche steril.

Die Sekundärverpackung ist insbesondere als verschweißter Folienbeutel ausgebildet, welcher zur Entnahme der Primärverpackung aufgerissen werden kann.

Medizinische Ernährungslösungen sind teilweise oft sehr sauerstoffsensibel. Das gleiche gilt auch für Infusionslösungen mit einem gegenüber Sauerstoff empfindlichen Wirkstoff. Es ist daher bekannt, dass die Sekundärverpackung zumindest eine Sauerstoffbarriereschicht zur Reduzierung der Migration von Sauerstoff in Richtung der Primärverpackung aufweist.

Eine derartige Sekundärverpackung, in der ein Mehrkammerbeutel angeordnet ist, ist beispielsweise aus der Offenlegungsschrift WO 97/37628 A1 bekannt.

Die Primärverpackung kann aus einer mehrlagigen Polypropylen-Folie ausgebildet sein. Mehrlagige Polypropylen-Folien sind mechanisch hinreichend stabil und haben im Gegensatz zu vielen anderen Kunststoffen, wie beispielsweise PVC, verbesserte Eigenschaften, insbesondere hinsichtlich der Vermeidung von Migration von Bestandteilen aus der Folie in die medizinische Flüssigkeit oder von Bestandteilen aus der medizinischen Flüssigkeit in die Folie.

Sauerstoff kann allerdings verhältnismäßig gut durch die Folie migrieren, weshalb bei sauerstoffsensiblen Produkten die Sekundärverpackung mit einer Sauerstoffbarriere versehen wird.

Auch die Sekundärverpackung kann aus einer mehrlagigen Folie ausgebildet sein. Im Unterschied zur Primärverpackung wird in dem vorstehend beschriebenen Stand der Technik dabei aber eine Polypropylen-Schicht lediglich als innerste Schicht verwendet, wohingegen zumindest eine äußere Schicht aus PET ausgebildet ist. PET hat in aller Regel eine deutlich geringere Reißdehnung als Polypropylen. Eine mehrlagige Polypropylen-Folie ohne andere Kunststoffschichten wäre daher als Aufreißbeutel nur wenig geeignet.

Die einzelnen Kunststofflagen der Folie für die Sekundärverpackung können durch einen Klebstoff miteinander verbunden sein. Hierfür gibt es Maschinen, welche in einem großindustriellen Maßstab dazu geeignet sind, lange Folienbahnen mit einer definierten Menge Klebstoff zu beschichten und zu verbinden.

Es hat sich in der Praxis gezeigt, dass, möglicherweise aufgrund der Klebstoffschicht, unerwünschte Substanzen, wie beispielsweise zyklisches Diethylen-Glycol-Adipat aus der Sekundärverpackung in die Primärverpackung und sodann in die darin enthaltene medizinische Flüssigkeit migrieren können.

Dies kann insbesondere bei Verpackungen mit einem kleinen Innenvolumen, wie sie beispielsweise in der Pädiatrie verwendet werden, zu einem Problem führen, da bei diesen Verpackungen das Verhältnis der Oberfläche der Sekundärverpackung zum Füllvolumen recht hoch ist.

### Aufgabe der Erfindung

Der Erfindung liegt demgegenüber die Aufgabe zugrunde, die genannten Nachteile des Standes der Technik zu reduzieren.

Es ist insbesondere eine Aufgabe der Erfindung, eine Sekundärverpackung bzw. ein Arzneimittelprodukt mit einer Sekundärverpackung bereitzustellen, bei welchem die Sekundärverpackung nicht nur eine gute Sauerstoffbarriere bereitstellt, sondern auch die Migration von enthaltenen oder sich bildenden Bestandteilen aus der Folie der Sekundärverpackung in Richtung Primärverpackung möglichst geringgehalten ist.

### Zusammenfassung der Erfindung

Die Aufgabe der Erfindung wird bereits durch eine als Beutel ausgebildete Sekundärverpackung, durch eine Folie, welche für die Sekundärverpackung ausgebildet ist, durch Verwendung einer Sauerstoffbarriereschicht sowie durch ein Verfahren zur Herstellung eines Arzneimittelprodukts nach einem der unabhängigen Ansprüche gelöst.

Gemäß einem ersten Aspekt betrifft die Erfindung eine als Beutel ausgebildete Sekundärverpackung für ein Arzneimittelprodukt,
wobei die Sekundärverpackung aus einer Folie ausgebildet ist, welche eine Außenseite und eine Innenseite umfasst,
wobei die Folie eine Sauerstoffbarriereschicht aus einem Metall- und/oder Halbmetalloxid umfasst,
wobei die Folie zumindest drei Lagen umfasst, von denen eine erste innere Lage ein Polyolefin, insbesondere ein Polypropylen ist, wobei sich in Richtung der Außenseite eine zweite Lage und eine dritte Lage eines Kunststoffes anschließen, wobei die drei Lagen mittels einer ersten Klebstoffschicht und einer zweiten Klebstoffschicht verbunden sind, und wobei die Sauerstoffbarriereschicht zwischen der ersten Klebstoffschicht und der zweiten Klebstoffschicht angeordnet ist.

Vorzugsweise ist die Folie aus genau drei Kunststoffschichten ausgebildet bzw. aufgebaut.

Durch die Platzierung der Sauerstoffbarriereschicht zwischen der inneren Polyolefin-Lage und der angrenzenden Kunststoffschicht befindet sich lediglich eine einzige Klebstoffschicht in Richtung der Primärverpackung, welche in die Sekundärverpackung eingelegt wird. Hierdurch kann die Migration von möglicherweise sich während der Lagerung bildenden unerwünschten Stoffen in Richtung Primärverpackung weiter reduziert werden.

Die innere Polyolefin-Lage kann im Sinne der Erfindung auch aus einem Polyolefin-halten Matrix-Phasen-Polymer-System bereitgestellt sein. Bei einem Matrix-Phasen-Polymer-System sind zumindest zwei verschiedenen Polymere vorhanden, wobei ein Polymer entmischt, insbesondere als dispers verteilte erstarrte Tropfen, in der Matrix des anderen Polymers vorhanden ist.

Gemäß einer bevorzugten Ausführungsform umfasst die Folie für die Sekundärverpackung genau eine einzige Sauerstoffbarriereschicht und außer den über die Klebstoffschichten verbundenen drei Kunststoffschichten keine weiteren Schichten. Es kann insbesondere bei Verwendung einer anorganischen Metall- und/oder Halbmetalloxidschicht auf eine Absorberschicht und/oder eine zweite Sauerstoffbarriereschicht verzichtet werden.

Gemäß einer bevorzugten Ausführungsform umfasst die zweite Lage die Sauerstoffbarriereschicht und ist mit der Sauerstoffbarriereschicht angrenzend an die erste Lage mittels der ersten Klebstoffschicht mit der ersten Lage verbunden. Die Klebstoffschicht ist also zwischen der ersten Lage und der Sauerstoffbarriereschicht angeordnet.

Definitionsgemäß ist die Sauerstoffbarriereschicht Teil der zweiten Lage, also Teil der zweiten Kunststoffschicht.

Als zweite Lage kann insbesondere eine Kunststoffschicht mit einer abgeschiedenen anorganischen Oxidschicht verwendet werden.

Derartige Metall- oder Halbmetalloxidschichten werden insbesondere mittels physikalischer oder chemischer Dampfabscheidung auf das Substrat aufgebracht. Bereits Schichten mit einer Dicke von 0,5 bis 10 µm bilden eine gute Sauerstoffbarriere. Es handelt sich um amorphe Oxidschichten, die auch als Glasschicht oder glasartige Schicht beschrieben werden können.

Über die Platzierung der Sauerstoffbarriereschicht direkt gegenüber der Polyolefin-Lage wird auch die Migration von sich möglicherweise in der zweiten Lage bildenden unerwünschten Stoffen reduziert.

Bei den unerwünschten Stoffen kann es sich insbesondere um ein Adipat, insbesondere ein Polyethylen-Glycol-Adipat, insbesondere ein zyklisches Diethylen-Glycol-Adipat (cDEGA, cyclic Diethylene glycol adipate), handeln. Das Adipat kann sich insbesondere bei der Lagerung in einer der Lagen bilden, insbesondere in der ersten oder zweiten Klebstoffschicht.

Die zweite Lage und/oder die dritte Lage sind vorzugsweise aus einem anderen Kunststoff als die erste Lage ausgebildet.

In der Sekundärverpackung kann ein Sauerstoffabsorber angeordnet sein, um den Sauerstoffgehalt in der Verpackung weiter zu reduzieren. Dieser kann insbesondere als eingelegter Beutel mit einem sauerstoffabsorbierenden Material, beispielsweise Eisenpulver und Natriumchlorid, ausgebildet sein.

Die Sauerstoffbarriereschicht wird bei einer Ausführungsform der Erfindung aus Siliziumoxid und/oder Aluminiumoxid, insbesondere aus amorphem Siliziumoxid und/oder Aluminiumoxid gebildet. Wie vorstehend ausgeführt, lässt sich die Sauerstoffbarriereschicht auch als glasartige Schicht, insbesondere anorganische glasartige Schicht, beschreiben.

Bei einer Ausführungsform der Erfindung beträgt das Verhältnis einer Dicke der ersten Lage zu einer Dicke der zweiten Lage einschließlich der Sauerstoffbarriereschicht und/oder zu einer Dicke der dritten Lage 2 bis 20, vorzugsweise 3 bis 15, besonders bevorzugt 5 bis 9.

Die erste Lage ist also vorzugsweise dicker ausgebildet als die zweite und/oder dritte Lage.

Weiter hat gemäß einem Ausführungsbeispiel die erste Lage eine Dicke von 50 bis 200 µm, vorzugsweise von 75 bis 95 µm.

Die zweite Lage kann einschließlich Sauerstoffbarriereschicht eine Dicke von 5 bis 50 µm, vorzugsweise von 10 bis 14 µm, haben. Die dritte Lage kann eine Dicke von 5 bis 50 µm, vorzugsweise von 10 bis 14 µm, haben.

Vorzugsweise ist die Sekundärverpackung als Aufreißbeutel ausgebildet.

In einer Ausgestaltung ist die Sekundärverpackung aus zwei miteinander verschweißten Folien ausgebildet. So hat die Sekundärverpackung zwei Längsschweißnähte und zwei Querschweißnähte.

Um das Einreißen zu erleichtern, kann die Sekundärverpackung zumindest einen Einschnitt oder eine Kerbe aufweisen. Der Einschnitt oder die Kerbe erstreckt sich bei einer Ausführungsform bis in den Bereich einer Schweißnaht.

In der Sekundärverpackung ist vorzugsweise eine als Beutel, insbesondere als Infusionsbeutel, ausgebildete Primärverpackung angeordnet.

Die Primärverpackung ist gemäß einer Ausführungsform der Erfindung als Infusionsbeutel ausbildet und aus einer miteinander verschweißten mehrlagigen Folie aufgebaut und besitzt zumindest eine Schweißnaht, vorzugsweise zumindest eine Längs- und zumindest eine Querschweißnaht, an welcher zwei mehrlagige Folien miteinander verschweißt sind. Insbesondere umfasst die Primärverpackung zwei Längs- und zwei Querschweißnähte.

Weiter kann die Primärverpackung noch zumindest einen Port zur Entnahme einer medizinischen Flüssigkeit umfassen. Der Port ist insbesondere mit seinem Unterteil in der Schweißnaht oder einer der Schweißnähte, insbesondere in einer Querschweißnaht, mit eingeschweißt. Das Unterteil des Ports kann zum Beispiel in der Gestalt eines Schiffchens ausgeführt sein. Der Port kann Bestandteil eines Konnektors sein, in dem insbesondere ein Septum angeordnet ist. An den Konnektor kann zum Beispiel eine Nadel, ein Spike oder ein Luer-Konnektor, insbesondere ein Luer-Lock-Konnektor, angeschlossen werden.

Weiter kann die Primärverpackung noch einen Hänger zum Anbringen an einem Rack oder einem Infusionsständer umfassen. Der Hänger kann insbesondere als Ausnehmung oder Einschnitt in einer dem Port gegenüberliegenden Querschweißnaht ausgebildet sein.

Die mehrlagige Folie der Primärverpackung weist gemäß einem Ausführungsbeispiel der Erfindung zumindest drei, vorzugsweise genau drei, Lagen auf. Die Lagen sind stoffschlüssig miteinander verbunden. Insbesondere sind die Lagen durch Co-Extrudieren und anschließendes Zusammenfügen im heißen Zustand miteinander verbunden. Zumindest eine Lage der mehrlagigen Folie kann aus einem Matrix-Phasen-Polymer-System ausgebildet sein.

Die innere Lage steht mit der medizinischen Flüssigkeit in Kontakt. Die äußere Lage umfasst zumindest abschnittsweise die Oberfläche der als Infusionsbeutel ausgebildeten medizinischen Verpackung.

Bei einem Matrix-Phasen-Polymer-System sind, wie vorstehend beschrieben, zumindest zwei verschiedenen Polymere vorhanden, wobei ein Polymer entmischt, insbesondere als dispers verteilte erstarrte Tropfen, in der Matrix des anderen Polymers vorhanden ist.

Das Matrixpolymer des Matrix-Phasen-Polymer-Systems der inneren Lage, der mittleren Lage und der äußeren Lage umfasst jeweils ein Polypropylen-Polymer. Insbesondere besteht die Matrix aus einem Polypropylen.

Das Phasenpolymer des Matrix-Phasen-Polymer-Systems der inneren Lage, der mittleren Lage und der äußeren Lage kann jeweils zumindest ein Styrol-Ethylen/Butylen-Styrol-BlockCopolymer (SEBS) als Phasenpolymer umfassen.

Bei SEBS handelt es sich um ein aus Styrol-, sowie Butylen- und Ethylenabschnitten zusammengesetztes Blockpolymer, welches einen hydrierten Butadienabschnitt umfasst, an den sich Styrolgruppen anschließen. Dieses ist insbesondere durch eine Polymerisation eines Styrol- und Butadienmonomers und anschließende Hydrierung des zuvor polymerisierten SBS hergestellt. Das hydrierte Butadien bildet einen weichen Mittelblock zwischen den Styrolblöcken. Das SEBS geht eine gute Verbindung mit dem PP-Matrixpolymer ein.

So lässt sich eine mechanisch stabile Primärverpackung bereitstellen, welche insbesondere als Infusionsbeutel für eine, vorzugsweise parenterale, Ernährungslösung verwendet werden kann.

Die Primärverpackung kann insbesondere als Mehrkammerbeutel ausgebildet sein. In dem Mehrkammerbeutel können die Komponenten einer Ernährungslösung zur parenteralen Ernährung angeordnet sein.

Die Kammern sind vorzugsweise voneinander durch abziehbare Schweißnähte getrennt.

Beispielsweise durch Rollen der Primärverpackung werden diese Schweißnähte aufgetrennt und die Komponenten, welche die Ernährungslösung bilden, vermischen sich miteinander.

Vorzugsweise umfasst die Primärverpackung zumindest zwei Ports, von denen ein Port als Zuspritzport, insbesondere für ein Medikament, dient.

Die Sekundärverpackung ist vorzugsweise zusammen mit der in der Sekundärverpackung angeordneten Primärverpackung sterilisiert, insbesondere durch Autoklavieren.

Weiter sind vorzugsweise sowohl die Sekundär- als auch die Primärverpackung transparent.

Die Erfindung betrifft gemäß einem weiteren Aspekt ein Arzneimittelprodukt, welches vorstehende Sekundärverpackung und eine in der Sekundärverpackung angeordnete Primärverpackung umfasst.

Wie vorstehend beschrieben, ist die Primärverpackung insbesondere als Beutel ausgebildet.

Gemäß einer Ausführungsform ist die Primärverpackung für einen Einkammerbeutel mit einer medizinischen Flüssigkeit mit einem Gesamtvolumen von 10 bis 120 ml befüllt. Gemäß einer weiteren Ausführungsform ist die Primärverpackung für einen Mehrkammerbeutel mit einer medizinischen Flüssigkeit mit einem Gesamtvolumen von 150 bis 2000 ml befüllt. Insbesondere für pädiatrische Anwendungen ist die Primärverpackung für einen Mehrkammerbeutel mit einer medizinischen Flüssigkeit mit einem Gesamtvolumen von 150 bis 500 ml befüllt. Das Gesamtvolumen ist die Summe der einzelnen Kammervolumina in einem Mehrkammerbeutel.

Die medizinische Flüssigkeit ist eine Flüssigkeit, welche für medizinische Zwecke zum Einsatz kommt und hier intravenös verabreicht wird. In einer bevorzugten Ausführungsform ist die medizinische Flüssigkeit eine Infusionslösung. Insbesondere ist die medizinische Flüssigkeit eine gegenüber Sauerstoff sensitive medizinische Flüssigkeit.

Mögliche Beispiele für derartige Infusionslösungen umfassen
- Lösungen, Emulsionen und/oder Suspensionen mit Nährstoffen für die parenterale Ernährung, insbesondere mit Lipiden, Aminosäuren und/oder Glucose;
- Kolloid-Lösungen, insbesondere für die Blutersatztherapie (z.B. Voluven^{®}); und/oder
- sogenannte vorgemischte Systeme, bei denen der medizinischen Flüssigkeit bereits ein Wirkstoff zugegeben ist z.B. Paracetamol oder Propofol.

Insbesondere enthält die Primärverpackung die Komponenten einer Ernährungslösung zur Verwendung in der Pädiatrie. Insbesondere kann die Primärverpackung die Komponenten einer Ernährungslösung für frühgeborene Babys mit einem sehr kleinen Gewicht (VLBW = Very Low Birth Weight) von weniger als 1500 g oder für extrem kleine Frühgeborene (ELBW = Extremely Low Birth Weight) von weniger als 1000 g enthalten.

Die Erfindung betrifft des Weiteren eine Folie, welche für vorstehend beschriebene Sekundärverpackung ausgebildet ist.

Die Folie kann insbesondere derart ausgebildet sein, wie es vorstehend im Zusammenhang mit der Ausgestaltung der Folie, aus der die Sekundärverpackung ausgebildet ist, beschrieben wurde.

Es handelt sich also insbesondere um eine Folie mit drei Kunststofflagen, von denen eine erste Lage aus einem Polypropylen ausgebildet ist und wobei sich zwischen einer ersten Klebstoffschicht und einer zweiten Klebstoffschicht eine Sauerstoffbarriereschicht befindet.

Gemäß einem weiteren Aspekt betrifft die Erfindung die Verwendung einer Sauerstoffbarriereschicht zur Reduzierung der Migration von zyklischem Diethylen-Glykol-Adipat aus einer Sekundärverpackung, die aus einer mehrlagigen Folie aus Kunststoff mit zumindest einer Klebstoffschicht ausgebildet ist, in Richtung einer medizinischen Flüssigkeit, die in einer in die Sekundärverpackung eingelegten Primärverpackung enthalten ist.

Wie vorstehend beschrieben, kann durch eine anorganische Metall- und/oder Halbmetalloxidschicht die Migration von zyklischem Diethylen-Glykol-Adipat, welches sich möglicherweise während der Lagerung in der Folie, insbesondere in den Klebstoffschichten bildet, reduziert werden.

Die Sauerstoffbarriereschicht ist dabei gemäß einer bevorzugten Ausführungsform zwischen einer ersten Klebstoffschicht und einer zweiten Klebstoffschicht angeordnet.

Bei dem Klebstoff handelt es sich vorzugsweise um einen Polyurethan-basierten Zweikomponenten-Klebstoff.

Gemäß einem weiteren Aspekt betrifft die Erfindung ein Verfahren zur Herstellung eines Arzneimittelproduktes, insbesondere eines Arzneimittelproduktes, wie es vorstehend beschrieben ist, umfassend die Schritte:
- Bereitstellen einer Polyolefin-Folie als erste Lage,
- Bereitstellen einer Polyethylenterephthalat-Folie mit einer Sauerstoffbarriereschicht als zweite Lage,
- Bereitstellen einer Polyethylenterephthalat-Folie als dritte Lage,
- Verbinden der ersten, zweiten und dritten Lage mittels eines Klebstoffes, so dass eine mehrlagige Kunststofffolie ausgebildet wird,
- Bereitstellen einer als Beutel ausgebildeten Primärverpackung mit einer medizinischen Flüssigkeit,
- Einbringen der der als Beutel ausgebildeten Primärverpackung zwischen zwei der mehrlagigen Kunststofffolien,
- Herstellen einer Sekundärverpackung durch Verschweißen der mehrlagigen Kunststofffolien,
- Sterilisieren, insbesondere Autoklavieren, der Sekundärverpackung mit der in der Sekundärverpackung angeordneten Primärverpackung.

Die Sauerstoffbarriereschicht wird dabei vorzugsweise derart angeordnet, dass diese an die erste Lage angrenzt.

Zum Verbinden der Folien wird vorzugsweise ein Polyurethan-basierter Zweikomponenten-Klebstoff verwendet.

### Kurzbeschreibung der Zeichnungen

Der Gegenstand der Erfindung soll im Folgenden Bezug nehmend auf ein schematisch dargestelltes Ausführungsbeispiel anhand der Zeichnungen Fig. 1 bis Fig. 3 näher erläutert werden.
Fig. 1 zeigt eine als Infusionsbeutel ausgebildete medizinische Verpackung.
Fig. 2 ist eine schematische Schnittansicht der für den Infusionsbeutel verwendeten mehrlagigen Folie.
Fig. 3 ist ein Flussdiagramm eines Ausführungsbeispiels des erfindungsgemäßen Verfahrens.

### Detaillierte Beschreibung der Zeichnungen

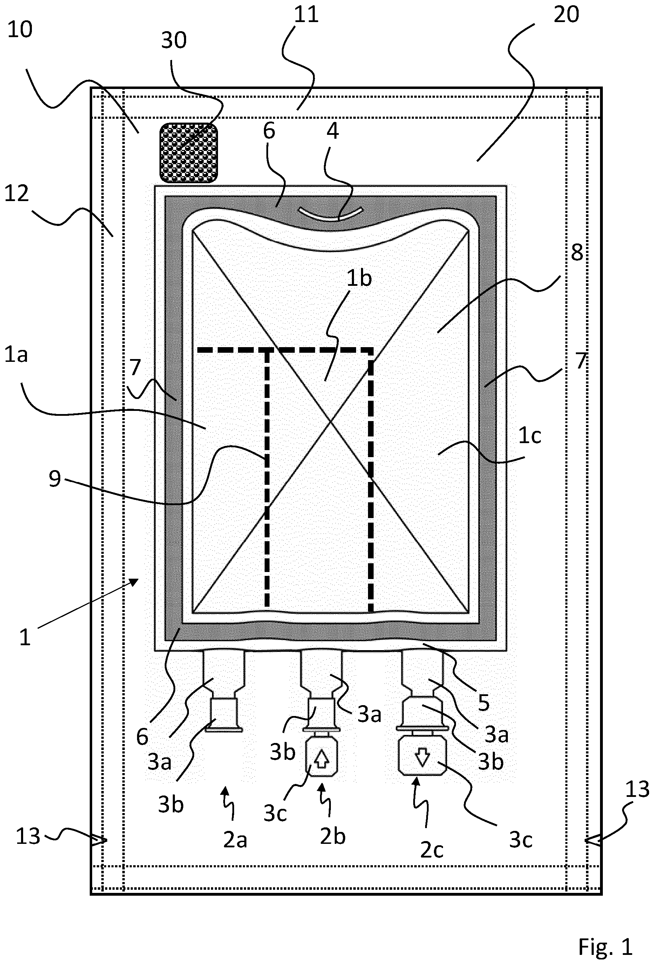

Fig. 1 zeigt eine als Infusionsbeutel 1 ausgebildete medizinische Primärverpackung, welche in einer als Aufreißbeutel ausgebildeten Sekundärverpackung 10 angeordnet ist.

Der Infusionsbeutel 1 besteht aus zwei miteinander verschweißen mehrlagigen Folien 8. Die mehrlagigen Folien 8 sind über die Längsschweißnähte 7 und die Querschweißnähte 6 miteinander verbunden, so dass ein Beutel gebildet ist, der mit einer medizinischen Flüssigkeit befüllt ist.

Die mehrlagigen Folien 8 sind insbesondere mittels eines Impulsschweißverfahrens miteinander verbunden. Dabei werden die Folien 8 mittels eines Schweißwerkzeugs mit erwärmbaren Siegelleisten, welche mit der Folie in Kontakt kommen, verschweißt, indem die Siegelleisten temporär aufgeheizt werden, so dass die zwischen den Siegelleisten eingespannten Folien zumindest abschnittsweise schmelzflüssig werden und so verschweißt werden.

Der Infusionsbeutel 1 umfasst zumindest einen Port, in diesem Ausführungsbeispiel drei Ports 2a, 2b, 2c, von denen ein Port 2b dem Einfüllen von Flüssigkeit, beispielsweise der Zudosierung eines Medikaments, und ein anderer Port 2c der Entnahme der medizinischen Flüssigkeit dient.

Die Ports 2a-c umfassen in diesem Ausführungsbeispiel ein Einschweißschiffchen 3a, mit welchem sie in einem Bereich 5 einer Querschweißnaht 6 eingeschweißt sind.

Der Port 2a ist in diesem Ausführungsbeispiel als Blindport ausgebildet, welcher mit dem Oberteil 3b lediglich verschlossen ist.

Die beiden Ports 2b und 2c stellen jeweils das Unterteil 3a eines Konnektors bereit. Die beiden Konnektoren werden jeweils durch die beiden Unterteile 3a sowie durch die Oberteile 3c gebildet. Vorzugsweise ist das Oberteil 3b auf das Unterteil 3a aufgesetzt, insbesondere aufgeprellt. Ein Septum (ist hier in den Figuren nicht dargestellt), das den Durchgang in dem Port 2b, 2c bzw. in dem Konnektor zum Beutelvolumen verschließt, ist formschlüssig zwischen dem jeweiligen Unterteil 3a und dem Oberteil 3b eingeschlossen. Das genannte Septum ist ein selbstschließendes, wiederverschließbares Elastomerelement, das mit einem Spike und/oder auch mit einer Nadel durchstoßen werden kann, um Flüssigkeit zu entnehmen oder zuzuführen. Nach dem Herausziehen des Spikes und/oder der Nadel verschließt sich das Septum selbstständig. Als Elastomermaterial kann z.B. Polyisopren verwendet werden. Weiter umfasst das Oberteil 3b des Konnektors jeweils eine abbrechbare Kappe 3c, die das Septum überdeckt. Das jeweilige Septum ist somit erst nach dem Abbrechen der Kappe 3c zugänglich.

Weiter umfasst der Infusionsbeutel 1 auf der dem zumindest einen Port 2b, 2c gegenüberliegenden Seite einen Hänger 4 zum Anbringen des Infusionsbeutels an einem Infusionsständer oder einem Rack. Der Hänger 4 kann als Einschnitt oder Ausstanzung in der Querschweißnaht 6 ausgebildet sein.

Der Infusionsbeutel 1 ist hier als Mehrkammerbeutel, mit beispielsweise drei, Kammern 1a - 1c ausgebildet.

In den Kammern 1a-1c können insbesondere die Komponenten einer parenteralen Ernährungslösung angeordnet sein. Diese können insbesondere in eine Protein-, eine Fett- und eine Wasserkomponente unterteilt sein. Insbesondere enthält der Infusionsbeutel 1 eine parenterale Ernährungslösung für die Pädiatrie.

Die Kammern 1a - 1c sind durch ablösbare Schweißnähte 9 voneinander getrennt.

Bei diesem Ausführungsbeispiel können die drei Ports 2a, 2b und 2c bei der Herstellung des Infusionsbeutels 1 verwendet werden, um jeweils eine Komponente der Ernährungslösung in die einzelnen Kammern 1a - 1c zu füllen.

Der Port 2a ist als Blindport ausgebildet und hat im Gegensatz zu den Ports 2b und 2c nach der Befüllung des Infusionsbeutels keine Funktion. Der Infusionsbeutel 1 ist ansonsten aus einer mehrlagigen Polypropylen-Folie ausgebildet.

Damit der Infusionsbeutel 1 vollständig, also auch auf seiner Außenseite steril ist, ist dieser in einer Sekundärverpackung 10 angeordnet und ist zusammen mit der Sekundärverpackung 10 sterilisiert.

Die Sekundärverpackung 10 ist als aufreißbarer Folienbeutel ausgebildet.

Hierzu sind zwei sich gegenüberliegende Folien 20 mittels einer Querschweißnaht 11 und einer Längsschweißnaht 12 miteinander verbunden. Die Sekundärverpackung 10 ist mit einer Sauerstoffbarriereschicht 25 versehen. Weiter befindet sich ein Sauerstoffabsorber 30 in der Sekundärverpackung 10.

Um die als Folienbeutel ausgebildete Sekundärverpackung 10 leicht aufreißen zu können, umfasst diese randseitig zumindest einen Einschnitt, insbesondere in Form einer Kerbe 13, welche bis in die Schweißnaht 12 reichen kann. Ausgehend von der Kerbe 13 wird so beim Einreißen der Anfang einer Risslinie bereitgestellt. Die Sekundärverpackung 10 kann so einfach aufgerissen und die Primärverpackung in Form des Infusionsbeutels 1 entnommen werden.

Im Unterschied zur Folie 8 des Infusionsbeutels 1 umfasst die Sekundärverpackung 10 eine mehrlagige Folie 20, welche außer einer inneren ersten Polypropylenlage 23 eine zweite und eine dritte Lage 26, 28 aus einem anderen Kunststoff mit einer geringeren Reißdehnung als die erste Lage 23 aufweist.

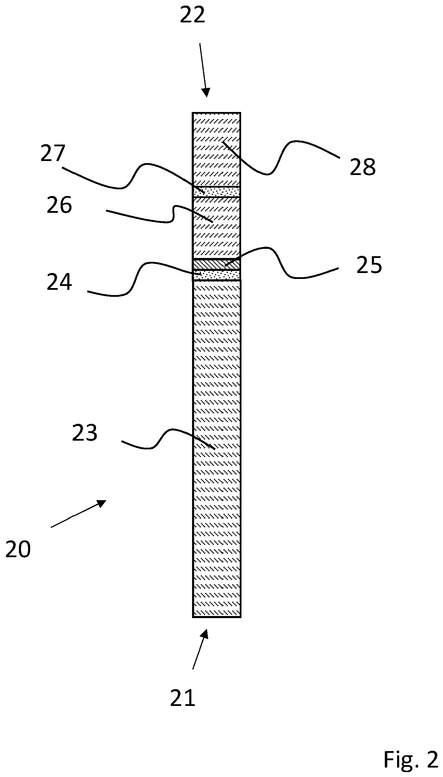

Fig. 2 ist ein schematischer Querschnitt, welcher den Aufbau der Folie 20 von ihrer Innenseite 21 bis zur Außenseite 22 zeigt.

Die erste Lage 23 ist durch eine Polypropylenfolie, insbesondere mit einer Dicke von 75 bis 95 µm, bereitgestellt. Über eine Klebstoffschicht 24, vorzugsweise mit einem Flächengewicht von 2 bis 5 g/m², ist die erste Lage 23 mit einer zweiten Lage 26 verbunden.

Die zweite Lage 26 hat einschließlich einer Sauerstoffbarriereschicht 25 eine Dicke von 10 bis 14 µm. Die Sauerstoffbarriereschicht 25 sitzt als abgeschiedene Silizium- oder Aluminiumoxidschicht auf der zweiten Lage 26. Mithin ist die Sauerstoffbarriereschicht unmittelbar über die erste Klebstoffschicht 24 mit der ersten Lage 23 verbunden. Dies reduziert die Migration nicht nur von Sauerstoff, sondern insbesondere auch von zyklischem Diethylen-Glycol-Adipat in Richtung der ersten Lage 23 und damit in Richtung der Primärverpackung 1.

Die zweite Lage 26 ist über eine zweite Klebstoffschicht 27 mit der dritten Lage 28 verbunden. Die dritte Lage 28 hat vorzugsweise eine Dicke von 10 bis 14 µm. Die zweite Klebstoffschicht 27 hat vorzugsweise ein Flächengewicht von 2 bis 5 g/m².

Die erste und die zweite Klebstoffschicht 24, 27 werden vorzugsweise durch einen Polyurethan-basierten Zweikomponenten-Klebstoff gebildet.

Die zweite Lage 26 und die dritte Lage 28 sind vorzugsweise aus einem Polyethylenterephthalat ausgebildet (PET). Diese Schichten tragen u.a. dazu bei, dass sich die Sekundärverpackung 10 leicht einreißen lässt.

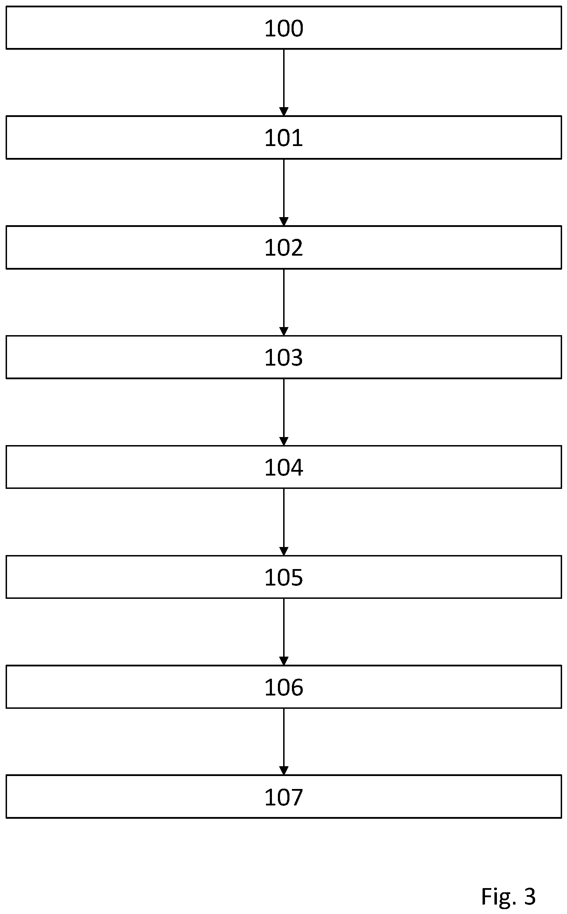

Fig. 3 ist ein Flussbild der Verfahrensschritte gemäß eines Ausführungsbeispiels der Erfindung.

Zunächst wird eine Polyolefin-Folie als erste Lage bereitgestellt 100.

Eine Polyethylenterephthalat-Folie mit einer Sauerstoffbarriereschicht wird als zweite Lage bereitgestellt 101.

Es folgen das Bereitstellen einer Polyethylenterephthalat-Folie als dritte Lage 102, das Verbinden der ersten, zweiten und dritten Lage mittels eines Klebstoffes, wobei die zweite Lage derart angeordnet wird, dass die Sauerstoffbarriereschicht an die erste Lage angrenzt, so dass eine mehrlagige Kunststofffolie ausgebildet wird 103.

Sodann wird eine als Beutel ausgebildete Primärverpackung mit einer medizinischen Flüssigkeit bereitgestellt 104.

Die als Beutel ausgebildete Primärverpackung wird zwischen zwei der mehrlagigen Kunststofffolien eingebracht 105.

Sodann wir die Sekundärverpackung durch Verschweißen der mehrlagigen Kunststofffolien hergestellt 106.

Es folgt das Sterilisieren, insbesondere Autoklavieren, der Sekundärverpackung mit der in der Sekundärverpackung angeordneten Primärverpackung 107.

### Bezugszeichenliste:

- 1: Primärverpackung/Infusionsbeutel
- 1a-c: Kammer
- 2a: Blind-Port
- 2b: Port (zum Zuführen)
- 2c: Port (zum Entnehmen)
- 3a: Unterteil
- 3b: Oberteil
- 3c: Kappe / Abbrechteil
- 4: Hänger
- 5: Bereich Einschweißschiffchen
- 6: Querschweißnaht
- 7: Längsschweißnaht
- 8: Folie
- 9: Schweißnähte der Kammern
- 10: Sekundärverpackung
- 11: Querschweißnaht
- 12: Längsschweißnaht
- 13: Kerbe
- 20: Folie
- 21: Innenseite
- 22: Außenseite
- 23: 1. Lage
- 24: 1. Klebstoffschicht
- 25: Sauerstoffbarriereschicht
- 26: 2. Lage
- 27: 2. Klebstoffschicht
- 28: 3. Lage
- 30: Sauerstoff-Absorber
- 100: Bereitstellen einer Polyolefin-Folie als erste Lage
- 101: Bereitstellen einer Polyethylenterephthalat-Folie mit einer Sauerstoffbarriereschicht als zweite Lage
- 102: Bereitstellen einer Polyethylenterephthalat-Folie als dritte Lage
- 103: Verbinden der ersten, zweiten und dritten Lage mittels eines Klebstoffes, wobei die zweite Lage derart angeordnet wird, dass die Sauerstoffbarriereschicht an die erste Lage angrenzt, so dass eine mehrlagige Kunststofffolie ausgebildet wird
- 104: Bereitstellen einer als Beutel ausgebildeten Primärverpackung mit einer medizinischen Flüssigkeit
- 105: Einbringen der der als Beutel ausgebildeten Primärverpackung zwischen zwei der mehrlagigen Kunststofffolien
- 106: Herstellen einer Sekundärverpackung durch Verschweißen der mehrlagigen Kunststofffolien,
- 107: Sterilisieren, insbesondere Autoklavieren, der Sekundärverpackung mit der in der Sekundärverpackung angeordneten Primärverpackung.

## Patentansprüche

1. Als Beutel ausgebildete Sekundärverpackung (10) für ein Arzneimittelprodukt,
wobei die Sekundärverpackung (19) aus einer Folie (20) ausgebildet ist, welche eine Außenseite (22) und eine Innenseite (21) umfasst,
wobei die Folie (20) eine Sauerstoffbarriereschicht (25) aus einem Metall- und/oder Halbmetalloxid umfasst,
wobei die Folie (20) zumindest drei Lagen (23,26,28) umfasst, von denen eine erste innere Lage (23) ein Polyolefin, insbesondere ein Polypropylen ist, wobei sich in Richtung der Außenseite (22) eine zweite Lage (26) und eine dritte Lage (28) eines Kunststoffes anschließen, wobei die drei Lagen (23,26,28) mittels einer ersten Klebstoffschicht (24) und einer zweiten Klebstoffschicht (27) verbunden sind, **dadurch gekennzeichnet, dass** die Sauerstoffbarriereschicht (25) zwischen der ersten Klebstoffschicht (24) und der zweiten Klebstoffschicht (27) angeordnet ist.

2. Sekundärverpackung (10) nach Anspruch 1, **dadurch gekennzeichnet, dass** die zweite Lage (26) die Sauerstoffbarriereschicht (25) umfasst und die zweite (26) Lage mit der Sauerstoffbarriereschicht (25) an die erste Lage (23) angrenzend über die erste Klebstoffschicht (24) mit der ersten Lage (23) verbunden ist.

3. Sekundärverpackung (10) nach einem der vorstehenden Ansprüche, **dadurch gekennzeichnet, dass** die erste und die zweite Klebstoffschicht (24,27) ein Adipat, insbesondere eine Polyethylen-Glykol-Adipat, insbesondere ein zyklisches Diethylen-Glykol-Adipat, bildet und/oder umfasst.

4. Sekundärverpackung (10) nach einem der vorstehenden Ansprüche, **dadurch gekennzeichnet, dass** die zweite Lage (26) und/oder die dritte Lage (28) aus einem anderen Kunststoff als die erste Lage (23), insbesondere aus einem Polyethylenterephthalat, ausgebildet ist/sind.

5. Sekundärverpackung (10) nach einem der vorstehenden Ansprüche, **dadurch gekennzeichnet, dass** die Sauerstoffbarriereschicht (25) aus Siliziumoxid und/oder Aluminiumoxid, insbesondere aus amorphem Siliziumoxid und/oder Aluminiumoxid, ausgebildet ist.

6. Sekundärverpackung (10) nach einem der vorstehenden Ansprüche, **dadurch gekennzeichnet, dass** das Verhältnis einer Dicke der ersten Lage (23) zu der zweiten Lage (26) einschließlich der Sauerstoffbarriereschicht (25) und/oder zu der dritten Lage (28) 2 bis 20, vorzugsweise 3 bis 15, besonders bevorzugt 5 bis 9, beträgt.

7. Sekundärverpackung (10) nach einem der vorstehenden Ansprüche, **dadurch gekennzeichnet, dass** die erste Lage (23) eine Dicke von 50 bis 200 µm, vorzugsweise von 75 bis 95 µm, hat, und/oder dass die zweite Lage (26) einschließlich der Sauerstoffbarriereschicht (25) eine Dicke von 5 bis 50 µm, vorzugsweise von 10 bis 14 µm, hat, und/oder dass die dritte Lage (28) eine Dicke von 5 bis 50 µm, vorzugsweise von 10 bis 14 µm, hat.

8. Sekundärverpackung (10) nach einem der vorstehenden Ansprüche, **dadurch gekennzeichnet,**
**dass** die Sekundärverpackung (10) als Aufreißbeutel ausgebildet ist, insbesondere mit einem Einschnitt oder einer Kerbe (13) zum Einreißen ausgespart ist und/oder
**dass** in der Sekundärverpackung (10) eine als Beutel ausgebildete Primärverpackung (1) angeordnet ist und/oder
**dass** in der Sekundärverpackung ein Sauerstoff-Absorber (30) angeordnet ist.

9. Arzneimittelprodukt, umfassend eine Sekundärverpackung (10) nach einem der vorstehenden Ansprüche und eine in der Sekundärverpackung (10) angeordnete und mit einem Arzneimittel befüllte Primärverpackung (1).

10. Arzneimittelprodukt nach dem vorstehenden Anspruch, **dadurch gekennzeichnet, dass** die Primärverpackung (1) als Beutel ausgebildet ist, insbesondere wobei die Primärverpackung (1) aus einer mehrlagigen Polypropylen-Folie ausgebildet ist, vorzugsweise aus einer Polypropylen-Folie, welche zumindest eine Lage aus einem Matrix-Phasen-Polymer-System umfasst.

11. Arzneimittelprodukt nach einem der vorstehenden Ansprüche, **dadurch gekennzeichnet, dass** die Primärverpackung (1) als ein Einkammerbeutel mit einem Volumen von 10 bis 120 ml oder als ein Mehrkammerbeutel mit einem Gesamtvolumen von 150 bis 2000 ml medizinscher Flüssigkeit befüllt ist.

12. Arzneimittelprodukt nach einem der vorstehenden Ansprüche, **dadurch gekennzeichnet, dass** das Arzneimittelprodukt sterilisiert ist, insbesondere mittels Autoklavierens und/oder Gamma-Bestrahlung.

13. Folie (20), ausgebildet für eine Sekundärverpackung (10) nach einem der vorstehenden Ansprüche, wobei die Folie (20) eine Sauerstoffbarriereschicht (25) aus einem Metall- und/oder Halbmetalloxid umfasst, wobei die Folie (20) zumindest drei Lagen (23,26,28) umfasst, von denen eine erste innere Lage (23) ein Polyolefin, insbesondere ein Polypropylen ist, wobei sich in Richtung der Außenseite (22) eine zweite Lage (26) und eine dritte Lage (28) eines Kunststoffes anschließen, wobei die drei Lagen (23,26,28) mittels einer ersten Klebstoffschicht (24) und einer zweiten Klebstoffschicht (27) verbunden sind, **dadurch gekennzeichnet, dass** die Sauerstoffbarriereschicht (25) zwischen der ersten Klebstoffschicht (24) und der zweiten Klebstoffschicht (27) angeordnet ist.

14. Verwendung einer Sauerstoffbarriereschicht (25) zur Reduzierung der Migration von zyklischem Diethylen-Glykol-Adipat aus einer Sekundärverpackung (10), die aus einer mehrlagigen Folie (20) aus Kunststoff mit zumindest einer Klebstoffschicht (24,27) ausgebildet ist, in Richtung einer medizinischen Flüssigkeit, die in einer in die Sekundärverpackung (10) eingelegten Primärverpackung (1) enthalten ist.

15. Verwendung nach dem vorstehenden Anspruch, **dadurch gekennzeichnet, dass** die Sauerstoffbarriereschicht (25) zwischen einer ersten Klebstoffschicht (24) und einer zweiten Klebstoffschicht (27) angeordnet wird.

16. Verfahren zur Herstellung eines Arzneimittelprodukts, insbesondere eines Arzneimittelprodukts nach einem der vorstehenden Ansprüche, umfassend die Schritte:
- Bereitstellen einer Polyolefin-Folie als erste Lage (100),
- Bereitstellen einer Polyethylenterephthalat-Folie mit einer Sauerstoffbarriereschicht als zweite Lage (101),
- Bereitstellen einer Polyethylenterephthalat-Folie als dritte Lage (102),
- Verbinden der ersten, zweiten und dritten Lage mittels eines Klebstoffes, so dass eine mehrlagige Kunststofffolie ausgebildet wird (103),
- Bereitstellen einer als Beutel ausgebildeten Primärverpackung mit einer medizinischen Flüssigkeit (104),
- Einbringen der als Beutel ausgebildeten Primärverpackung zwischen zwei der mehrlagigen Kunststofffolien (105),
- Herstellen einer Sekundärverpackung durch Verschweißen der mehrlagigen Kunststofffolien (106),
- Sterilisieren, insbesondere Autoklavieren, der Sekundärverpackung mit der in der Sekundärverpackung (10) angeordneten Primärverpackung.

17. Verfahren nach dem vorstehenden Anspruch, **dadurch gekennzeichnet, dass** die zweite Lage (26) derart angeordnet wird, dass die Sauerstoffbarriereschicht (25) an die erste Lage (23) angrenzt und/oder dass als Klebstoff ein Polyurethan-basierter Zweikomponenten-Klebstoff verwendet wird.
